# EUROPEAN PATENT APPLICATION

(11) **EP 4 746 102 A1**
(43) Date of publication of application: **20.05.2026**
(21) Application number: 25214255.9
(22) Date of filing: 07.11.2025
(51) Int. Cl.: H01M 10/058, H01M 50/531, H01M 50/536, H01M 50/533, H01M 50/538

(54) **ELECTRODE ASSEMBLY AND SECONDARY BATTERY**

(30) Priority: 15.11.2024 KR 20240163160
(71) Applicant: SAMSUNG SDI CO., LTD., Yongin-si, Gyeonggi-do 17084 (KR)
(72) Inventor: RO, Uijeong, 16678 Suwon-si, Gyeonggi-do (KR)
(74) Representative: Gulde & Partner

(57) **Abstract**

The present disclosure relates to an electrode assembly, and a technical problem to be solved is to provide an electrode assembly that prevents a substrate from being damaged by a tab. To this end, the present disclosure provides an electrode assembly including a first electrode and a second electrode, wherein at least one of the first electrode and the second electrode includes a substrate having a hole formed therein, a coating layer provided on a first part of the substrate, and a tab joined to a second part of the substrate, and wherein the hole is formed to pass through the substrate and at least partially overlaps an edge portion of the tab.

## Description

### BACKGROUND

### 1. Field of the Disclosure

The present disclosure relates to an electrode assembly and a secondary battery capable of preventing cracks from occurring in an electrode.

### 2. Discussion of Related Art

Secondary batteries are batteries that can be charged and discharged, unlike primary batteries that cannot be recharged. Low-capacity secondary batteries can be used in small portable electronic devices such as smartphones, feature phones, notebook computers, digital cameras, and camcorders, while high-capacity secondary batteries can be widely used as power sources for driving motors in hybrid vehicles, electric vehicles, and the like and as power storage batteries. These secondary batteries can include an electrode assembly including electrode(s) (such as a positive electrode and/or a negative electrode), a case accommodating the electrode assembly, an electrode terminal connected to the electrode assembly, and the like.

An electrode may include a substrate and an active material layer formed on the substrate. The active material layer includes an active material. In addition, the electrode may further include a tab attached on the substrate. The electrode assembly including such electrodes can be, for example, wound to form a jellyroll (i.e., stacked on top of one another and wound together, resulting in a cylindrical spiral pattern).

When a secondary battery is charged, the electrodes may expand. In such a case, the substrate may be deformed as the electrode is compressed by the expansion. In particular, stress applied to the substrate may be concentrated at a tab boundary, which is an area where the tab is attached in the substrate. Because of the expansion the tab boundary may reach its local elongation limit, and cracks may occur at the tab boundary.

As the demand for high-capacity secondary batteries has increased in recent years, substrates are trending towards thinner films. Accordingly, cracks may occur more easily in the substrate.

When cracks occur in the electrode, the resistance of the secondary battery increases, heat is generated around the crack, and/or the capacity of the secondary battery decreases, which cause a decrease in the reliability of the secondary batteries.

The above-described information disclosed in the background technology of this disclosure is only intended to improve understanding of the background of the present disclosure and therefore may include information that does not constitute the related art.

### SUMMARY OF THE DISCLOSURE

The invention is defined by the appended claims. The description that follows is subjected to this limitation. Any disclosure lying outside the scope of said claims is only intended for illustrative as well as comparative purposes.

One embodiment of the present disclosure relates to an electrode assembly and/or a secondary battery in which an area where stress is concentrated is removed from a substrate.

Another embodiment of the present disclosure relates to an electrode assembly and/or a secondary battery that prevents or mitigates cracks from occurring in a substrate.

Still another embodiment of the present disclosure relates to an electrode assembly and/or a secondary battery that alleviates stress concentration in a substrate.

However, the technical problems to be achieved by the present disclosure are not limited to the above-mentioned problems, and other problems that are not mentioned will be clearly understood by those skilled in the art from the following description.

According to one embodiment of the present disclosure for solving the above technical problem, an electrode assembly includes a first electrode and a second electrode, wherein at least one of the first electrode and the second electrode includes a substrate including a hole, a coating layer provided on a first part of the substrate, and a tab joined to a second part of the substrate, and wherein the hole is formed to pass through the substrate and at least partially overlaps an edge portion of the tab.

According to another embodiment of the present disclosure for solving the above technical problem, a secondary battery may include an electrode assembly, the electrode assembly including an electrode and a separator, and a case accommodating the electrode assembly, wherein the electrode may include a substrate, the substrate including a hole, a coating layer provided on a first part of the substrate, and a tab joined to a second part of the substrate, and the hole passes through the substrate and at least partially overlaps an edge portion of the tab.

### BRIEF DESCRIPTION OF THE DRAWINGS

The following drawings attached to the present specification illustrate preferred embodiments of the present disclosure and, together with the detailed description of the disclosure described hereinafter, serve to help further understand the technical idea of the present disclosure, therefore the present disclosure should not be construed as being limited to matters described in such drawings, in which:
FIG. 1 is a view schematically illustrating an example of a cylindrical secondary battery according to one embodiment of the present disclosure;
FIG. 2 is a view schematically showing an example of an electrode according to one embodiment of the present disclosure;
FIG. 3 is a view schematically showing an example of an electrode;
FIG. 4 is a view schematically showing an example of an electrode according to one embodiment of the present disclosure;
FIG. 5 is a view schematically showing an example of an electrode according to one embodiment of the present disclosure;
FIG. 6 is a view schematically showing an example of an electrode according to one embodiment of the present disclosure;
FIG. 7 is a view schematically showing an example of an electrode according to one embodiment of the present disclosure;
FIG. 8 is a view schematically showing an example of an electrode according to one embodiment of the present disclosure;
FIG. 9 is a view schematically showing an example of an electrode according to one embodiment of the present disclosure;
FIG. 10 is a view schematically showing an example of an electrode according to one embodiment of the present disclosure;
FIG. 11 is a view schematically showing an example of an electrode according to one embodiment of the present disclosure; and
FIG. 12 is a view schematically showing an example of an electrode according to one embodiment of the present disclosure.

### DETAILED DESCRIPTION OF EXEMPLARY EMBODIMENTS

Hereinafter, preferred embodiments of the present disclosure will be described in detail with reference to the accompanying drawings. Prior to this, the terms or words used in the specification and claims should not be interpreted as limited to their usual or dictionary meanings, and should be interpreted in meanings and concepts that are consistent with the technical concept of the present disclosure based on the principle that the present inventor can appropriately define the concepts of the terms in order to explain her or her disclosure in its best way. Accordingly, it should be understood that the configurations shown in the drawings and the embodiments described herein are only preferred embodiments of the present disclosure and are not intended to represent all of the technical ideas of the disclosure, and that there may be various equivalents and modifications that may be substituted for them at the time of filing this application.

In addition, when used herein, the terms "include," and "comprise," and/or "comprising," and "including" specify the presence of stated features, numbers, steps, operations, members, elements and/or groups thereof, but do not exclude the presence or addition of one or more other features, numbers, operations, members, steps, elements and/or groups thereof.

In addition, to aid understanding of the disclosure, the accompanying drawings are not drawn to scale and the dimensions of some components may be exaggerated. In addition, the same reference numbers may be assigned to the same components in different embodiments.

When two things being compared are said to be "same", it means they are "substantially the same." Therefore, "substantially same" may include deviations that are considered low in the art, for example, deviations of less than 5%. In addition, uniformity of a parameter in a given area may imply uniformity from an average point of view.

Although "first," "second," and the like are used to describe various components, these components are not limited by these terms. These terms are used only to distinguish one component from another, and unless specifically stated otherwise, it is to be understood that a first component may also be a second component.

Throughout the specification, unless specifically stated otherwise, each element may be singular or plural.

The arrangement of an arbitrary component on the "upper portion (or lower portion)" of a component or "above (or below)" the component not only means that the arbitrary component is disposed in contact with the upper surface (or lower surface) of the component, but also means that other components may be interposed between the component and the arbitrary component disposed on (or under) the component.

In addition, when a component is described as being "connected," "coupled," or "linked" to another component, it is to be understood that the components may be directly coupled or connected to one another, but that other components may be "interposed" between the components, or that each component may be "connected," "coupled," or "linked" through another component. In addition, when a portion is "electrically coupled" to another part, this includes not only the case where it is "directly connected" but also the case where it is "connected" with another member or element interposed therebetween.

Whenever reference is made throughout the specification to "A and/or B," this means A, B, or A and B, unless otherwise specified. That is, "and/or" includes all or any combination of the listed items. When "C to D" is described, this means C or more and D or less, unless otherwise specified.

The terminology used herein is for the purpose of describing embodiments of the present disclosure and is not intended to limit the present disclosure.

In the present specification, an X axis represents a width direction of the tab. In the present specification, an Y axis represents a thickness direction of the tab. The Y axis represents a direction perpendicular to the X axis. In the present specification, a Z axis represents a longitudinal direction of the tab. The Z axis represents a direction perpendicular to each of the X axis and the Y axis.

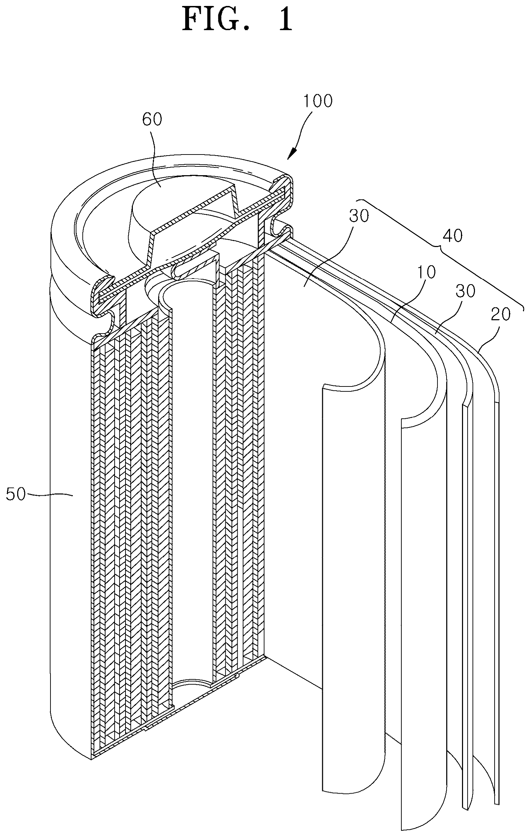

FIG. 1 is a cross-sectional view schematically illustrating an example of a cylindrical secondary battery according to one embodiment of the present disclosure.

As illustrated in FIG. 1, a secondary battery 100 according to one embodiment of the present disclosure may include a cylindrical case 50, an electrode assembly 40, and a cap assembly 60. In addition, the secondary battery 100 may further include a center pin (not shown). In addition, in the secondary battery 100 according to the embodiment of the present disclosure, since the cap assembly 60 also performs a current interruption operation, the cap assembly 60 is also referred to as a current interruption device in some cases.

For example, the case 50 may be formed in a cylindrical shape. The cylindrical case 50 in turn may include a substantially circular bottom portion and a cylindrical side wall extending a certain length upward from the circumference of the bottom portion. During the manufacturing process of the secondary battery 100, an upper portion of the case 50 is open. Therefore, during the assembly process of the secondary battery 100, the electrode assembly 40 and the center pin may be inserted into the case 50 together with an electrolyte. The cylindrical case 50 may be manufactured from, for example but not limited to, steel, stainless steel, aluminum, an aluminum alloy, or an equivalent thereof.

The electrode assembly 40 may be accommodated inside the case 50. The electrode assembly 40 may include a negative electrode 20 in which a negative electrode current collector is coated with a negative electrode active material (e.g., graphite, carbon, and the like), a positive electrode 10 in which a positive electrode current collector may be coated with a positive electrode active material (e.g., a transition metal oxide (such as LiCoO₂, LiNiO₂, LiMn₂O₄, and the like)), and a separator 30 located between the negative electrode 20 and the positive electrode 10 to prevent short circuits and allow only the movement of lithium ions. In addition, the negative electrode 20, the positive electrode 10 and the separator 30 may be wound into a substantially cylindrical shape.

The cap assembly 60 includes an upper cap. The cap assembly 60 may further include at least one of a lower cap, a vent, and an insulator. This cap assembly 60 may be coupled to an opening of the case 50 sealing the electrode assembly 40 inside the case 50.

However, the present disclosure is not limited thereto, and the case may have various shapes such as a cylindrical shape, a pouch-type shape, and the like. In addition, the case may be composed of a metal such as aluminum, an aluminum alloy, and nickel-plated steel, or a laminated film or plastic forming a pouch.

Meanwhile, as described above, the electrode assembly 40 includes the negative electrode 20, the positive electrode 10, and the separator 30 located between the negative electrode 20 and the positive electrode 10. In addition, the electrode assembly 40 may be accommodated in the cylindrical case 50 together with an electrolyte (not shown). Hereinafter, the electrode assembly 40 and the electrolyte will be described.

### Positive electrode 10

As the positive electrode active material, a compound capable of reversible intercalation and deintercalation of lithium (e.g., lithiated intercalation compound) may be used. Specifically, at least one of composite oxides of lithium and a metal selected from cobalt, manganese, nickel, and a combination thereof may be used.

The composite oxide may be a lithium transition metal composite oxide, and specific examples thereof may include lithium nickel-based oxides, lithium cobalt-based oxides, lithium manganese-based oxides, lithium iron phosphate-based compounds, cobalt-free nickel-manganese-based oxides, or a combination thereof.

As an example, a compound represented by any one of the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode 10 for the secondary battery 100 may include a current collector and a positive electrode active material layer formed on the current collector. The positive electrode active material layer may include a positive electrode active material and may further include a binder and/or a conductive material.

The content of the positive electrode active material may be 90 wt% to 99.5 wt% based on 100 wt% of the positive electrode active material layer, and the content of each of the binder and the conductive material may be 0.5 wt% to 5 wt%, based on 100 wt% of the positive electrode active material layer.

Al may be used as the current collector, but the present disclosure is not limited thereto.

### Negative electrode 20

The negative electrode active material includes a material capable of reversibly intercalating/deintercalating lithium ions, a lithium metal, an alloy of lithium and a metal, a material capable of doping and dedoping lithium, or a transition metal oxide.

The material capable of reversibly intercalating/deintercalating lithium ions may be a carbon-based negative electrode active material, and for example, may include crystalline carbon, amorphous carbon, or a combination thereof. Examples of the crystalline carbon may include graphite such as natural graphite or artificial graphite, and examples of the amorphous carbon may include soft carbon, hard carbon, mesophase pitch carbide, calcined coke, etc.

As the material capable of doping and dedoping lithium, a Si-based negative electrode active material or a Sn-based negative electrode active material may be used. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of silicon particles whose surface may be coated with amorphous carbon.

The silicon-carbon composite may further include crystalline carbon. For example, the silicon-carbon composite may include a core including crystalline carbon and silicon particles and an amorphous carbon active material layer located on the surface of the core.

The negative electrode 20 for the secondary battery 100 includes a current collector and a negative electrode active material layer located on the current collector. The negative electrode active material layer includes a negative electrode active material and may further include a binder and/or a conductive material.

For example, the negative electrode active material layer may include 90 to 99 wt% of the negative electrode active material, 0.5 to 5 wt% of the binder, and 0 to 5 wt% of the conductive material.

The binder may include a non-aqueous binder, an aqueous binder, a dry binder, or a combination thereof. When the aqueous binder is used as the negative electrode binder, a cellulose-based compound capable of imparting viscosity may be further included.

As the negative electrode current collector, any material selected from a copper foil, a nickel foil, a stainless steel foil, a titanium foil, a nickel foam, a copper foam, a polymer substrate coated with a conductive metal, and a combination thereof may be used.

The electrolyte for the secondary battery 100 includes a non-aqueous organic solvent and a lithium salt.

The non-aqueous organic solvent acts as a medium through which ions involved in the electrochemical reaction of the battery can move.

The non-aqueous organic solvent may be a carbonate-based, ester-based, ether-based, ketone-based, or alcohol-based solvent, an aprotic solvent, or a combination thereof, and may be used alone or in combination of two or more thereof.

In addition, when the carbonate-based solvent is used, a cyclic carbonate and a chain carbonate may be used in combination.

### Separator 30

Depending on the type of secondary battery 100, the separator 30 may be present between the positive electrode 10 and the negative electrode 20. As the separator 30, polyethylene, polypropylene, polyvinylidene fluoride, or a multilayer film of two or more thereof may be used.

The separator 30 may include a porous substrate, and an active material layer including an organic material, an inorganic material, or a combination thereof, and located on one side or both sides of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in one active material layer or may be present in a form in which an active material layer including an organic material and an active material layer including an inorganic material are stacked.

### Electrolyte (not shown)

The electrolyte for the secondary battery 100 includes a non-aqueous organic solvent and a lithium salt.

The non-aqueous organic solvent acts as a medium through which ions involved in the electrochemical reaction of the battery can move.

The non-aqueous organic solvent may be a carbonate-based, ester-based, ether-based, ketone-based, or alcohol-based solvent, an aprotic solvent, or a combination thereof.

Examples of the carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

Examples of the ester-based solvent include methyl acetate, ethyl acetate, n-propyl acetate, dimethyl acetate, methyl propionate, ethyl propionate, decanolide, mevalonolactone, and valerolactone, caprolactone, and the like.

Examples of the ether-based solvent may include dibutyl ether, tetraglyme, diglyme, dimethoxyethane, 2-methyltetrahydrofuran, 2,5-dimethyltetrahydrofuran, and tetrahydrofuran. In addition, cyclohexanone and the like may be used as the ketone-based solvent. Ethyl alcohol, isopropyl alcohol, and the like may be used as the alcohol-based solvent, and nitriles such as R-CN (where R is a linear, branched, or cyclic hydrocarbon group having 2 to 20 carbon atoms and may include a double bond, an aromatic ring, or an ether group); amides such as dimethylformamide; dioxolanes such as 1,3-dioxolane and 1,4-dioxolane; sulfolanes; and the like may be used as the aprotic solvent.

The non-aqueous organic solvent may be used alone or in a combination of two or more.

In addition, when the carbonate-based solvent is used, a mixture of a cyclic carbonate and a chain carbonate may be used, and the cyclic carbonate and the chain carbonate may be mixed in a volume ratio of 1:1 to 1:9.

The lithium salt is a material that is dissolved in an organic solvent and acts as a source of lithium ions within the battery, enabling the basic operation of the secondary battery and promoting the movement of lithium ions between the positive electrode and the negative electrode. Representative examples of the lithium salt may include one or two or more selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI)), LiC₄F₉SO₃, LIN(CₓF₂ₓ₊₁SO₂)(C_{y}F_{2y+1}SO₂) (where x and y are integers from 1 to 20), lithium trifluoromethanesulfonate, lithium tetrafluoroethanesulfonate, lithium difluorobis(oxalato)phosphate (LiDFOB), and lithium bis(oxalato)borate (LiBOB).

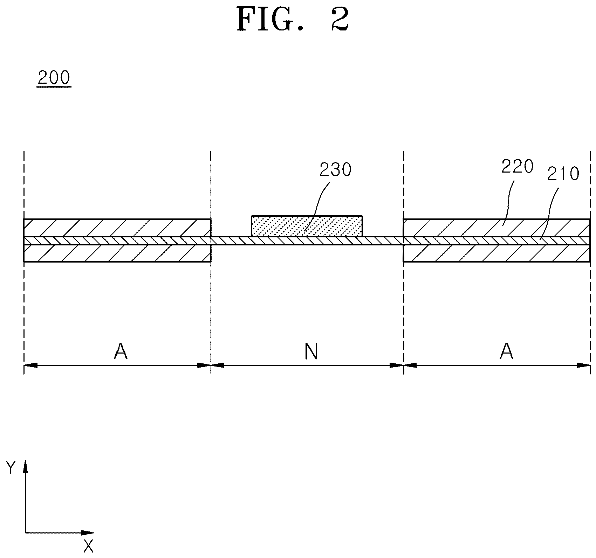

FIG. 2 is a cross-sectional view schematically showing an example of an electrode.

In FIG. 2, 200 represents an electrode according to one embodiment of the present disclosure.

The electrode 200 may include a substrate 210, an active material layer 220 provided on a part of the substrate 210, and a tab 230 having one side in contact with a part of the substrate 210 and the other side extending at a position away from the substrate 210.

Hereinafter, each component of the electrode 200 will be described in detail.

The electrode 200 includes a positive electrode 10 and/or a negative electrode 20. For example, as described in FIG. 1, the electrode assembly 40 according to one embodiment of the present disclosure includes the positive electrode 10 and the negative electrode 20. In such a case, the electrode 200 according to one embodiment of the present disclosure may be applied as the positive electrode 10 included in the electrode assembly 40. Alternatively, the electrode 200 according to one embodiment of the present disclosure may be applied as the negative electrode 20 included in the electrode assembly 40. Alternatively, the electrode 200 according to one embodiment of the present disclosure may be applied as both the positive electrode 10 and the negative electrode 20 included in the electrode assembly 40.

The substrate 210 includes the current collector described in FIG. 1. For example, when the electrode 200 is the positive electrode 10, the substrate 210 may include a positive electrode current collector. The positive electrode current collector includes, for example, aluminum (Al). For example, when the electrode 200 is the negative electrode 20, the substrate 210 may include a negative electrode current collector. The negative electrode current collector includes, for example, copper (Cu).

The active material layer 220 may include the active material layer described in FIG. 1. The active material layer 220 includes an active material. When the electrode 200 is the positive electrode 10, the active material includes a positive electrode active material. When the electrode 200 is the negative electrode 20, the active material includes a negative electrode active material. In addition, the active material layer 220 may further include a binder and/or a conductive material.

The active material layer 220 may be coated by being applied on the substrate 210 in the form of a slurry including the active material. Through this, the electrode 200 may form a wet electrode. Alternatively, the active material layer 220 may be attached to the substrate 210 in the form of a freestanding film including the active material. Through this, the electrode 200 may form a dry electrode.

The active material layer 220 may be provided on a part of the substrate 210. For example, the active material layer 220 may be provided on a part of one surface of the substrate 210. Alternatively, for example, as illustrated in FIG. 2, the active material layer 220 may be provided on parts of both surfaces of the substrate 210. In such a case, an area where the active material layer 220 is provided on a part of the substrate 210 may be conveniently referred to as a coated portion A. In addition, as the other part of the substrate 210, an area where (a) the active material layer 220 is not provided and (b) the substrate 210 is exposed to the outside may be conveniently referred to as an uncoated portion N.

One side of the tab 230 may be attached on the substrate 210. For example, one side (e.g., a first side) of the tab 230 may be attached to the substrate 210 on the uncoated portion N.

As a non-limiting example, the tab 230 may be attached to the substrate 210 via a conductive tape or an adhesive material. Alternatively, when the tab 230 includes a metallic material, the tab 230 may be welded to the substrate 210 by welding. For example, the tab 230 may be joined to the substrate 210 by various welding methods such as ultrasonic welding, laser welding, and the like.

The tab 230 has a first side (attached to the substrate 210) toward a second side. The second side of the tab 230 is not attached on the substrate 210 and is formed to extend outward, at a position away from the substrate 210.

For example, the tab 230 may include a middle tab in which the active material layer 220 is provided on both horizontal sides of the tab 230, as illustrated in FIG. 2. Alternatively, for example, the tab 230 may be attached to an end of the substrate 210 unlike what is illustrated in FIG. 2. In this way, the tab 230 can include many variations of tab design, each having at least one side attached to the substrate 210.

The tab 230 provides a passage through which the outside and the electrode 200 may be electrically connected. For example, the tab 230 may be electrically connected to the cap assembly 60, a current collector plate (not shown), the case 50, and the like. Through this, the tab 230 allows the electrode 200 and the outside to be electrically connected.

For this purpose the tab 230 includes a conductive material (e.g., a metallic material). When the electrode 200 is a positive electrode, the tab 230 may include aluminum or an aluminum alloy. When the electrode 200 is a negative electrode, the tab 230 may include nickel, nickel plating steel, and/or alloys thereof. Through this, electrons may move along the tab 230 to the electrode 200 or move to the outside from the electrode 200 through the tab 230.

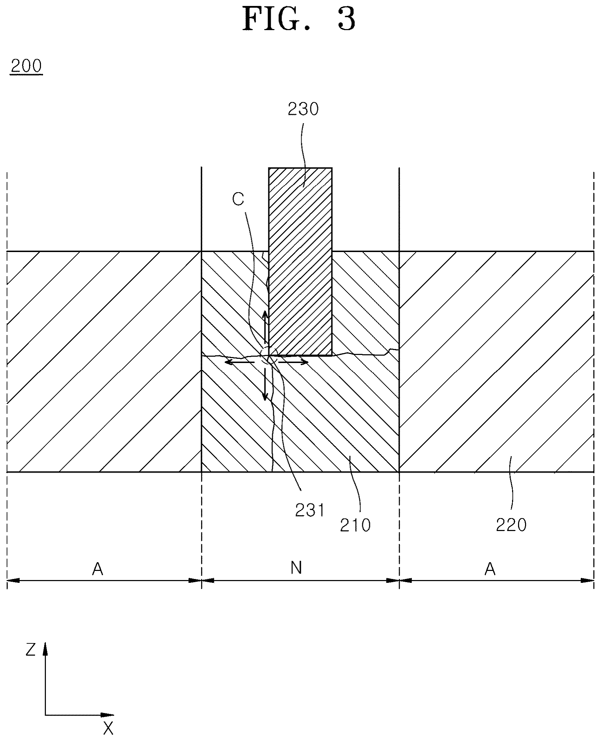

FIG. 3 is a view schematically showing an example of an electrode;

As the secondary battery 100 performs charging and discharging or deteriorates as the charging and discharging cycles progress, the electrode 200 may repeatedly expand and contract. When this occurs, the electrode 200 receives force from the separator and/or electrodes located in front and behind the substrate 210.

When the electrode 200 receives a force, the tab 230 presses on the substrate 210. Stress from the pressing is concentrated on an area where the substrate 210 and the tab 230 come into contact. In particular, greater stress is concentrated on an area where a corner portion 231 of the tab 230 comes into contact with the substrate 210.

Accordingly, cracks C occur in an area where the substrate 210 comes into contact with the tab 230. In particular, the cracks C may occur in an area where the substrate 210 comes into contact with the corner portion 231 of the tab 230.

These cracks C may propagate in the up-down or left-right directions along the tab 230. As the cracks C propagate and grow, the path through which current can flow in the electrode 200 becomes narrower. In this case, the electrode 200 may have increased resistance and/or decreased performance as heat is generated.

In this way, when cracks C occur in the substrate 210 or damage occurs in the electrode 200, the reliability of the secondary battery 100 may be reduced or safety problems may arise. Therefore, a solution to solve these problems is required.

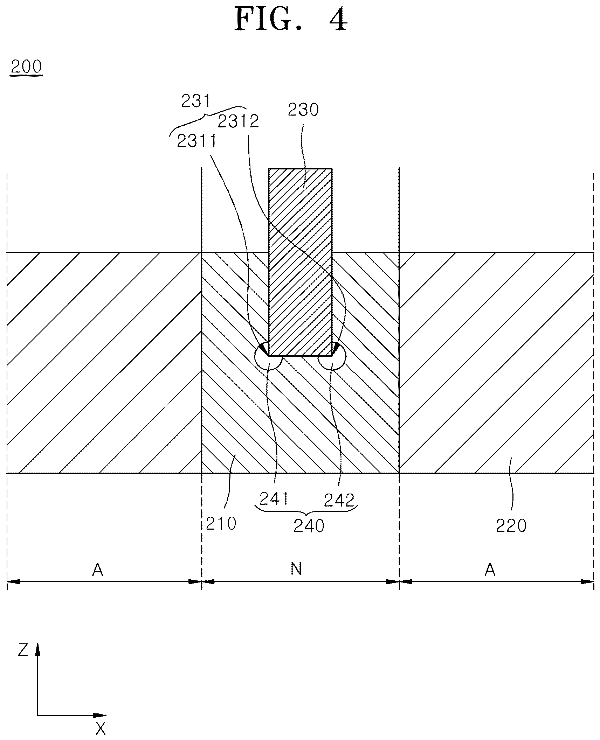

FIG. 4 is a view schematically showing an example of an electrode according to one embodiment of the present disclosure.

As described in FIG. 1, a secondary battery 100 according to one embodiment of the present disclosure includes an electrode assembly 40 and a case 50 for accommodating the electrode assembly 40.

The electrode assembly 40 according to one embodiment of the present disclosure includes an electrode 200. The electrode 200 includes a first electrode and a second electrode. For example, the first electrode is a positive electrode 10 and the second electrode is a negative electrode 20. Alternatively, for example, the first electrode is the negative electrode 20 and the second electrode is the positive electrode 10. Any details that overlap those described in FIGS. 1 to 3 regarding the positive electrode 10 and/or the negative electrode 20 are omitted.

The electrode assembly 40 may include the electrode 200 and a separator 30. For example, the electrode assembly 40 includes a first electrode, a second electrode, and a separator 30 located between the first electrode and the second electrode. Any details that overlap those described in FIGS. 1 to 3 regarding the separator 30 are omitted.

Hereinafter, the electrode assembly 40 and/or the electrode 200 included in the electrode assembly 40 will be described in detail.

The electrode 200 according to one embodiment of the present disclosure includes a substrate 210 including a hole 240; a coating layer 220 provided on a first part of the substrate 210; and a tab 230 joined to a second part of the substrate 210, wherein the hole 240 may be formed to pass through the substrate 210 and formed to at least partially overlap an edge portion of the tab 230.

In such a case, the electrode 200 includes at least one of the first electrode and the second electrode.

The substrate 210 according to one embodiment of the present disclosure includes the hole 240 to prevent cracks C from occurring in the substrate 210. The substrate 210 can include one or more holes 240.

For example, the hole 240 may be formed to pass through the substrate 210. For example, the hole 240 may be formed to pass through the substrate 210 in a direction perpendicular to the extension direction of the substrate 210. However, the hole 240 may be formed to pass through the substrate 210 in a direction oblique to the extension direction of the substrate 210.

Alternatively, for example, the hole 240 may form a groove on the substrate 210 without passing through the substrate 210. The hole 240 may be formed with a constant area from one surface toward the other surface of the substrate 210. For example, the hole 240 may be formed in the shape such as a cylinder, a polygonal cylinder, or the like. Alternatively, the hole 240 may be formed so that its area gradually narrows or widens from one surface to the other surface of the substrate 210. For example, the hole 240 may be formed in a shape such as a truncated cone, a truncated polygonal pyramid, or the like. Alternatively, for example, the hole 240 may be formed in a bullet shape (e.g., round nose) with the side facing the other surface being rounded.

At least a part of the hole 240 may be formed with a curved surface. When the hole 240 includes an angle, cracks may occur from that angle. To prevent such problems it is preferable that the hole 240 is formed to include a curved surface. For example, the hole 240 may be formed in a circular shape when viewed from one side of the substrate 210.

The hole 240 is intended to prevent the occurrence of cracks C and may be formed at a location on the substrate 210 where cracks C are expected to occur. For example, the hole 240 may be formed in an area where the substrate 210 and the tab 230 come into contact.

For example, the hole 240 may be formed in an area where the substrate 210 and an edge portion of the tab 230 come into contact. For example, when viewed from one side of the substrate 210, an edge portion of the tab 230 and the hole 240 may be formed to overlap each other such that a portion of the hole 240 may not be visible because it is covered by the tab 230. Through this, the hole 240 may prevent cracks C from occurring when the tab 230 presses the substrate 210.

Meanwhile, as described above, one side of the tab 230 may be joined to the substrate 210. In such a case, the tab 230 may be formed in a polygonal shape on the surface that comes into contact with the substrate 210. For example, the tab 230 may be formed in an overall polygonal pillar shape. For example, the tab 230 may be formed in an overall rectangular pillar shape.

The tab 230 may include one or more corner portions 231. The corner portion 231 includes vertices formed by the intersection of two or more edge portions. For example, the tab 230 includes a first corner portion 2311 and a second corner portion 2312 located spaced apart from the first corner portion 2311. The corner portion 231 can provide relatively greater stress to the substrate 210.

To solve this problem, for example, the hole 240 may be formed to overlap (e.g., at least partially overlap) one or more corner portions 231 of the tab 230 such that, when viewed from one side of the substrate 210, a portion of the hole 240 may not be visible because it is covered by the corner portion 231. That is, the corner portion 231 may not be in contact with the substrate 210 due to the hole 240. The hole 240 may prevent point contact between the substrate 210 and the corner portion 231 of the tab 230. Accordingly, even when the tab 230 applies a force to the substrate 210, the hole 240 prevents stress from being concentrated on the substrate 210 from the tab 230. Through this, the hole 240 may more effectively prevent cracks C from occurring when the tab 230 presses the substrate 210.

In this way, the electrode 200 according to one embodiment of the present disclosure may prevent the cracks C from occurring and/or growing by removing a portion where the cracks C may occur.

For example, the hole 240 may be formed to overlap one corner portion 231 of the tab 230.

For example, when the tab 230 includes n (n is a natural number greater than or equal to 1) corner portions 231 on the substrate 210, the substrate 210 may include m (m is a natural number greater than or equal to 1 and less than or equal to n) holes 240.

For example, the tab 230 includes two corner portions 231 located on the substrate 210. The two corner portions 231 include, for example, a first corner portion 2311 and a second corner portion 2312. In this case, the substrate 210 may include one or two holes 240. For example, the substrate 210 includes two holes 240. For example, the two holes 240 include a first hole 241 formed to overlap the first corner portion 2311 and a second hole 242 formed to overlap the second corner portion 2312.

In such a case, the first hole 241 and the second hole 242 may be formed spaced apart from each other. Through this, an area where stress is concentrated on the substrate 210 may be removed while maintaining the rigidity of the substrate 210.

However, the substrate 210 may include only the first hole 241 or only the second hole 242.

Furthermore, for example, when the tab 230 includes n (n is a natural number greater than or equal to 1) corner portions 231 on the substrate 210, the substrate 210 may include 1 (1 is a natural number greater than or equal to 1) holes 240.

For example, the tab 230 includes two corner portions 231 located on the substrate 210. The two corner portions 231 include, for example, a first corner portion 2311 and a second corner portion 2312. In this case, the substrate 210 may include one or more holes 240. For example, the substrate 210 may include three holes 240. For example, the three holes 240 may include a first hole 241 formed to overlap the first corner portion 2311, a second hole 242 formed to overlap the second corner portion 2312, and a third hole (not shown) formed to overlap the edge portion.

In this way, the electrode 200 according to one embodiment of the present disclosure may prevent the cracks C from occurring or growing in the electrode 200 by removing an area where stress is concentrated on the electrode 200.

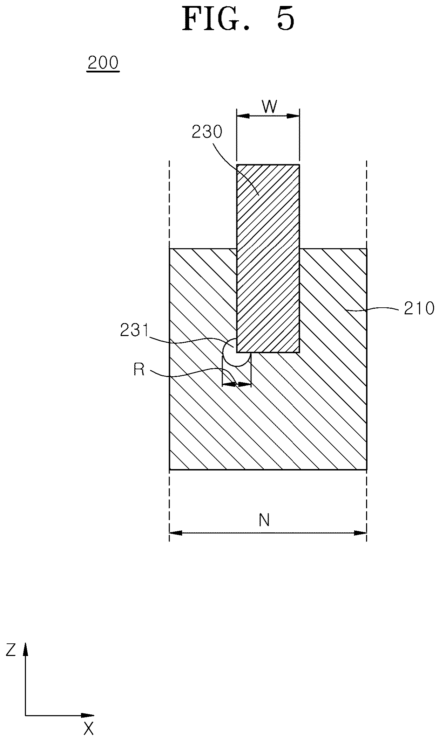

FIG. 5 is a view schematically showing an example of an electrode according to one embodiment of the present disclosure.

Through FIG. 4, the electrode 200 according to one embodiment of the present disclosure including the hole 240 was described. FIG. 5 describes the size of this hole 240.

In FIG. 5, R represents the width of the hole 240. The width R of the hole 240 represents the width of the hole 240 formed on one side of the substrate 210. When the hole 240 has a circular shape, the width R of the hole 240 represents the diameter of the hole 240. When the hole 240 has an elliptical shape, the width R of the hole 240 represents the diameter of the minor axis of the ellipse of the hole 240. When the hole 240 has a different shape, the width R of the hole 240 represents the narrowest width in the hole 240.

In FIG. 5, W represents the width of the tab 230. The width W of the tab 230 represents the length in the direction perpendicular to the direction in which the tab 230 extends. In addition, the width W of the tab 230 represents the length in the direction parallel to the joint surface where the substrate 210 and the tab 230 are joined. The width W of the tab 230 represents the width of one side end of the tab 230.

The width R of the hole 240 may be formed to be 1/5 or more of the width W of the tab 230. Alternatively, for example, the width R of the hole 240 can be formed to be 1/4 or more of the width W of the tab 230. When the width R of the hole 240 is formed to be less than 1/5 of the width W of the tab 230, the hole 240 may not remove all of the stress concentrated on the substrate 210. In this case, the hole 240 may not properly perform its role of stress removal and/or crack growth prevention. Therefore, it is preferable that the width R of the hole 240 is formed to be 1/5 or more of the width W of the tab 230.

Meanwhile, when the hole 240 may be formed in a circular shape, the center of the hole 240 and the corner portion 231 of the tab 230 may coincide. That is, the corner portion 231 may be located at the center of the hole 240. Through this, the hole 240 may effectively prevent cracks from occurring.

Hereinafter, various shapes, sizes and/or numbers of holes 240 will be described.

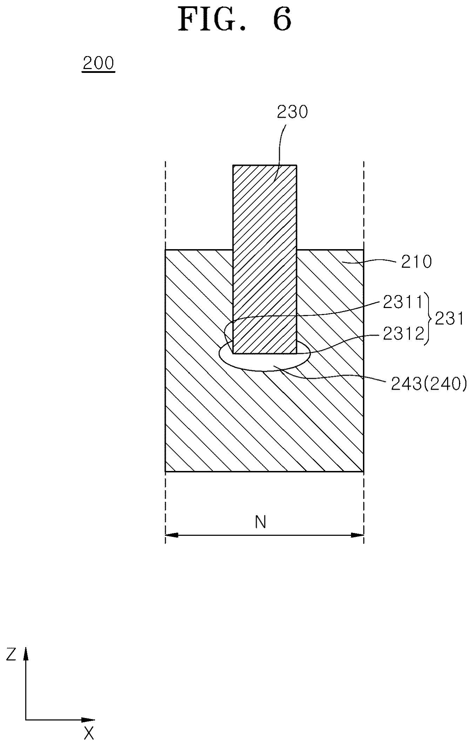

FIG. 6 is a view schematically showing an example of an electrode according to one embodiment of the present disclosure.

The electrode 200 according to one embodiment of the present disclosure includes a substrate 210 including a hole 240, a coating layer 220 provided on a first part of the substrate 210, and a tab 230 joined to a second part of the substrate 210.

As described in FIGS. 4 and 5, for example, the hole 240 may be formed to overlap one or more corner portions 231 of the tab 230. In such a case, for example, the hole 240 includes a hole 243 formed to overlap two or more corner portions 231 of the tab 230.

As illustrated in FIG. 6, the tab 230 may be formed in a rectangular parallelepiped shape. The tab 230 may have a rectangular contact surface that comes into contact with the substrate 210. The tab 230 may include a first corner portion 2311 and a second corner portion 2312 located on the substrate 210.

The hole 243 may be formed to overlap the first corner portion 2311 and the second corner portion 2312. The hole 243 may be formed long in the width direction of the tab 230. Accordingly, the hole 243 may be formed to overlap the edge portion connecting the first corner portion 2311 and the second corner portion 2312.

In this way, the hole 243 may be formed to overlap two or more corner portions 231, thereby more effectively preventing cracks C from occurring in the substrate 210.

Meanwhile, the shape of the tab 230 and/or hole 243 is not limited thereto. For example, the tab 230 may have three or more corner portions 231 located on the substrate 210. In this case, the hole 243 may include one hole overlapping two corner portions 231 and one hole overlapping one corner portion 231. Alternatively, the hole 243 may include one hole overlapping the three corner portions 231.

In this way, the hole 240 according to one embodiment of the present disclosure may be formed in an appropriate size, shape, and/or number depending on the shape of the tab 230. For example, when the space between the corner portions 231 is narrow, it is difficult to form a hole 240 corresponding to one corner portion 231, so that a hole 240 may be formed to correspond to two or more corner portions 231.

Through this structure, the electrode 200 according to one embodiment of the present disclosure may remove a stress concentration area and/or prevent the cracks C from occurring and/or growing in the substrate 210.

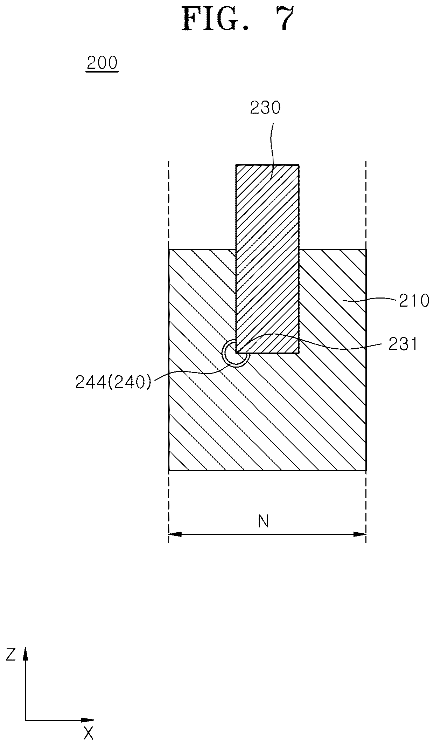

FIG. 7 is a view schematically showing an example of an electrode according to one embodiment of the present disclosure.

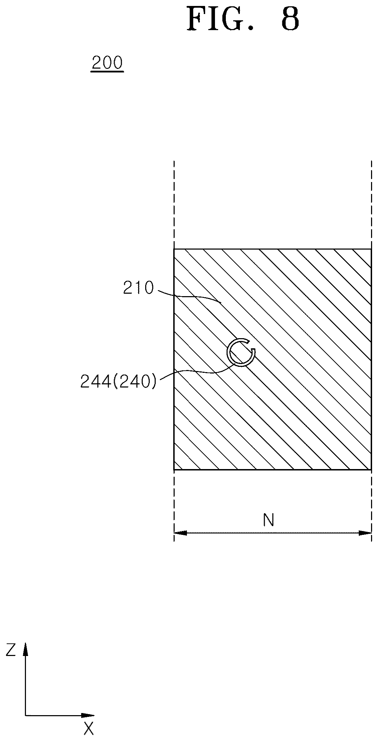

FIG. 8 is a view schematically showing an example of an electrode according to one embodiment of the present disclosure.

The electrode 200 according to one embodiment of the present disclosure includes a substrate 210 including a hole 240, a coating layer 220 provided on a part of the substrate 210, and a tab 230 joined to the other part of the substrate 210.

As described in FIGS. 4 and 5, for example, the hole 240 may be formed to overlap one or more corner portions 231 of the tab 230. In such a case, for example, the hole 240 may include a hole 244 formed in a C shape.

As illustrated in FIG. 8, the hole 240 may include a hole 244 formed in a C shape on the substrate 210, the C shaped area formed in an arc shape having a curved surface. That is, the hole 244 includes an opening that does not form a ring in the arc shape (i.e., a C shape). The hole 244 may be formed in a circular shape or an elliptical shape as a whole by combining the arc shape and the opening.

In such a case, the hole 244 may be formed so that the size and/or shape of the opening correspond(s) to that of the tab 230.

For example, the hole 244 may be formed to overlap the edge portion of the tab 230. For example, the edge portion of the tab 230 may be located inside the C shape.

In this case, for example, the hole 244 may be formed such that the size and/or shape of the opening correspond(s) to that of the edge portion of the tab 230. For example, the hole 244 may be formed with a relatively large opening. For example, when the hole 244 is formed in a circular shape as a whole, the arc shape may have a fan-shaped angle of 180 degrees or more based on the center of the hole 244. In addition, the opening may have a fan-shaped angle of 180 degrees or less based on the center of the hole 244. For example, when viewed from one side of the substrate 210, the opening may not be visible because it is covered by the tab 230, as shown in FIG. 7. However, the shape of the hole 244 is not limited to thereto.

Alternatively, for example, the hole 244 may be formed to overlap the corner portion 231 of the tab 230. For example, the corner portion 231 of the tab 230 may be located inside the C shape.

In this case, the hole 244 may be formed such that the size and/or shape of the opening correspond(s) that of the corner portion 231 of the tab 230. For example, the hole 244 may be formed with a relatively small opening. Likewise, when the hole 244 is formed in a circular shape as a whole, the arc shape may have a fan-shaped angle of 270 degrees or more based on the center of the hole 244. In addition, the opening may have a fan-shaped angle of 90 degrees or less based on the center of the hole 244. When viewed from one side of the substrate 210, the opening may not be visible because it is covered by the tab 230, as shown in FIG. 7. However, the shape of the hole 244 is not limited to thereto.

For example, the edge portion of the tab 230 and the corner portion 231 of the tab 230 may be located simultaneously within the C shape.

As another example, one or more edge portions of the tab 230 and/or one or more corner portions 231 of the tab 230 may be located within the C shape.

In this way, the hole 240 according to one embodiment of the present disclosure may be formed in an appropriate size, shape, and/or number depending on the shape of the tab 230. For example, the hole 240 may be formed in a C shape when it is difficult to form a through hole passing through the substrate 210 due to low rigidity of the substrate 210. Although not illustrated, the hole 240 may be formed in a groove shape when it is difficult to form a through hole passing through the substrate 210 due to low rigidity of the substrate 210.

Through this structure, the electrode 200 according to one embodiment of the present disclosure may remove a stress concentration area and/or prevent the cracks C from occurring and/or growing in the substrate 210.

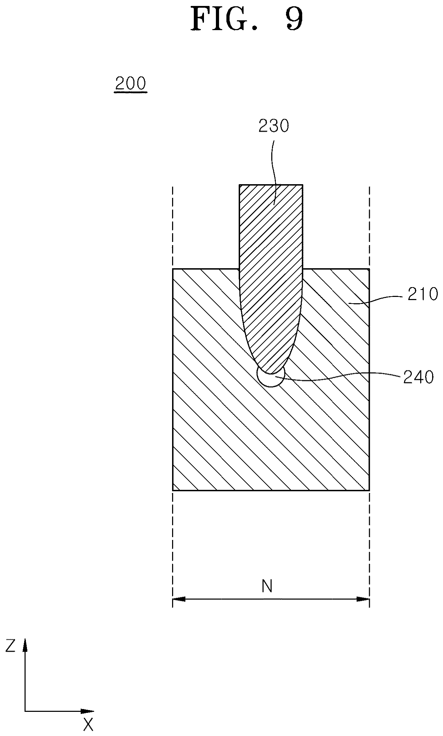

FIG. 9 is a view schematically showing an example of an electrode according to one embodiment of the present disclosure.

The electrode 200 according to one embodiment of the present disclosure includes a substrate 210 including a hole 240, a coating layer 220 provided on a part of the substrate 210, and a tab 230 joined to the other part of the substrate 210.

In FIGS. 4 to 8, a case in which one surface of the tab 230 in contact with the substrate 210 has a polygonal shape (e.g., a rectangular shape) may be described as an example.

For example, the tab 230 may be formed with one end having a round shape. For example, the tab 230 may be formed with a round shape at one side end that comes into contact with the substrate 210. In such a case, the round shape may include, for example, at least one of an arc shape, a semi-elliptical shape, and other curved shapes.

Through this, the electrode 200 according to one embodiment of the present disclosure may prevent the cracks C from occurring in the substrate 210 through the end shape of the tab 230.

In this way, when one end of the tab 230 does not include the corner portion 231, the tab 230 can provide the greatest stress to the substrate 210 at the end. For example, the hole 240 may be formed in an area where stress is most concentrated by the tab 230. For example, the hole 240 may be formed to overlap one end of the tab 230.

In this way, the hole 240 according to one embodiment of the present disclosure may be formed in an appropriate size, shape, and/or number depending on the shape of the tab 230.

Through this structure, the electrode 200 according to one embodiment of the present disclosure may remove a stress concentration area and/or prevent the cracks C from occurring and/or growing in the substrate 210.

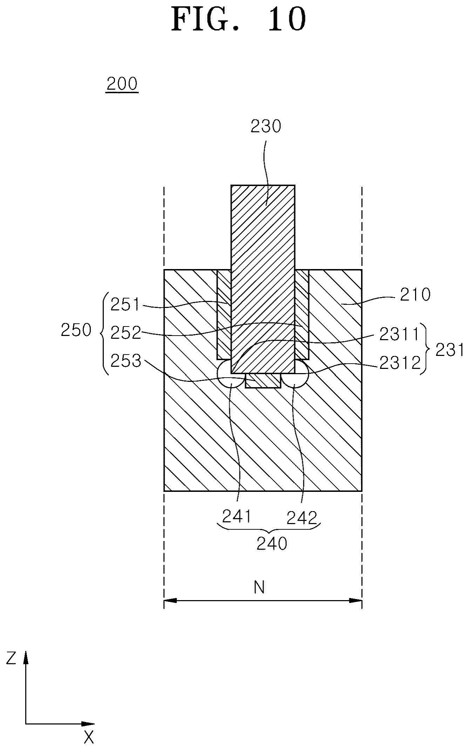

FIG. 10 is a view schematically showing an example of an electrode according to one embodiment of the present disclosure.

The electrode 200 according to one embodiment of the present disclosure includes a substrate 210 including a hole 240, a coating layer 220 provided on a part of the substrate 210, and a tab 230 joined to the other part of the substrate 210.

In addition, the electrode 200 may further include a first reinforcing material 250 provided adjacent to the tab 230 on the substrate 210.

The first reinforcing material 250 reduces the step formed between the tab 230 and the substrate 210. For example, the first reinforcing material 250 may be formed with a thinner thickness than the tab 230. Alternatively, the first reinforcing material 250 may be formed such that the thickness of the side in contact with the tab 230 is less than or equal to the thickness of the tab 230. In addition, the first reinforcing material 250 may have a thickness that gradually decreases toward a side away from the tab 230, forming a sloping or stepped surface.

Through this, the first reinforcing material 250 prevents stress from being concentrated on the substrate 210 in an adjacent portion of the tab 230 due to the step between the tab 230 and the substrate 210.

To perform this role smoothly, the first reinforcing material 250 may include a material having flexible and soft rigidity. For example, the first reinforcing material 250 may include a urethane-based resin. For example, the first reinforcing material 250 may be formed by urethane foam spraying.

The first reinforcing material 250 may be formed on the substrate 210 together with the hole 240.

For example, the hole 240 may be formed to overlap the corner portion 231 of the tab 230. For example, as illustrated in FIG. 10, the hole 240 may include a first hole 241 formed to overlap the first corner portion 2311 and a second hole 242 formed to overlap the second corner portion 2312.

In this case, for example, the first reinforcing material 250 may be located adjacent to the edge portion of the tab 230 on the substrate 210. For example, as illustrated in FIG. 10, the first reinforcing material 250 may include a left reinforcing material 251, a right reinforcing material 252, and a lower reinforcing material 253. In such a case, the left reinforcing material 251 may be provided adjacent to the left edge portion of the tab 230 on the substrate 210, the right reinforcing material 252 may be provided adjacent to the right edge portion of the tab 230 on the substrate 210, and the lower reinforcing material 253 may be provided adjacent to a lower edge portion of the tab 230 on the substrate 210.

In this way, the first reinforcing material 250 may be provided in an area adjacent to the tab 230 but not having the hole 240 formed.

Alternatively, for example, the hole 240 may be formed to overlap the edge portion of the tab 230. In this case, unlike as illustrated in FIG. 10, the first reinforcing material 250 may be located adjacent to the corner portion of the tab 230 on the substrate 210. Alternatively, the first reinforcing material 250 may be located adjacent to an edge portion and/or a corner portion of the tab 230 on the substrate 210.

For example, the first reinforcing material 250 can have at least one side end in contact with the hole 240. For example, the lower reinforcing material 253 may have one side in contact with the first hole 241 and the other side in contact with the second hole 242.

Through this structure, the electrode 200 according to one embodiment of the present disclosure can effectively alleviate and/or remove stress applied to the substrate 210 by the tab 230.

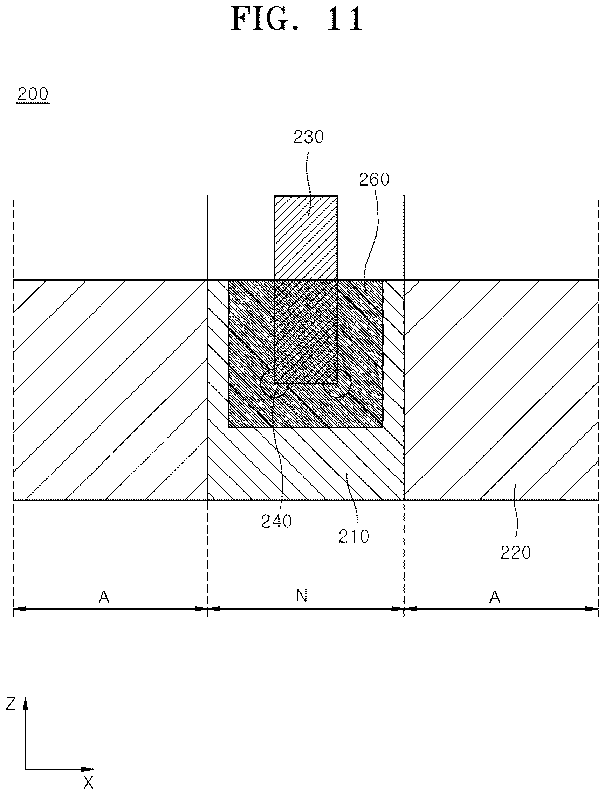

FIG. 11 is a view schematically showing an example of an electrode according to one embodiment of the present disclosure.

The electrode 200 according to one embodiment of the present disclosure may include a substrate 210 including a hole 240, a coating layer 220 provided on a part of the substrate 210, and a tab 230 joined to the other part of the substrate 210. In such a case, the hole 240 may include the hole 240 described in FIGS. 4 to 9.

In addition, the electrode 200 may further include a second reinforcing material 260 provided on the substrate 210 while covering the tab 230.

The second reinforcing material 260 can reinforce the rigidity of the electrode 200. For example, the second reinforcing material 260 can reinforce the rigidity of a relatively thinly formed substrate 210. In addition, for example, the second reinforcing material 260 can reinforce the strength of the tab 230. Moreover, the second reinforcing material 260 can reinforce the strength of the substrate 210 and/or the tab 230.

To this end, as illustrated in FIG. 11, the second reinforcing material 260 may be located on the substrate 210 while covering the tab 230. Furthermore, the second reinforcing material 260 may be located on a part of the active material layer 220 while covering the tab 230.

The second reinforcing material 260 may be formed in the form of a tape that may be attachable to the tab 230. For example, the reinforcing layer may include a conductive polymer. In addition, the reinforcing layer may further include an adhesive material that adheres the conductive polymer to the tab 230.

Alternatively, the second reinforcing material 260 may include a metal. The second reinforcing material 260 may be joined to the tab 230 and fixed to the electrode 200.

In addition, although not illustrated, the electrode 200 may include both the first reinforcing material 250 and the second reinforcing material 260. Through this, the strength of the electrode 200 itself can be reinforced while relieving the stress concentrated on the substrate 210.

As described above, the electrode 200 according to one embodiment of the present disclosure may secure sufficient rigidity even when a hole 240 is formed in the substrate 210.

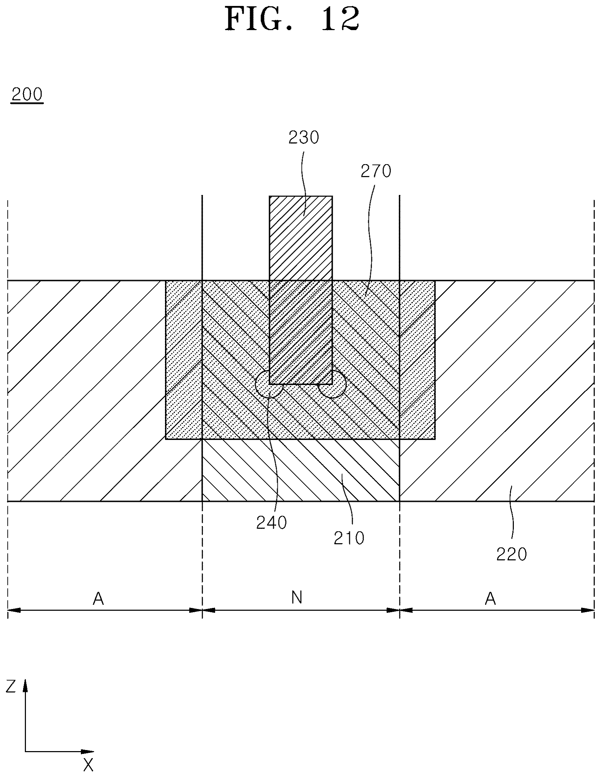

FIG. 12 is a view schematically showing an example of an electrode according to one embodiment of the present disclosure.

The electrode 200 according to one embodiment of the present disclosure may include a substrate 210 including a hole 240, a coating layer 220 provided on a part of the substrate 210, and a tab 230 joined to the other part of the substrate 210.

In addition, the electrode 200 may further include an insulating tape 270 that may be adhered to the substrate 210 while covering the tab 230 and includes an insulating material.

For example, when the separator 30 located between the electrodes 200 is torn, the electrodes 200 may come into contact with each other. The insulating tape 270 prevents a short circuit from occurring when the tab 230 comes into contact with an adjacent electrode. In addition, the insulating tape 270 protects the tab 230 from an external force.

For this purpose, the insulating tape 270 may be attached to the tab 230.

For example, as illustrated in FIG. 12, the insulating tape 270 may be attached to one surface of the substrate 210 while covering the tab 230. Furthermore, the insulating tape 270 may be attached so as to extend to the upper portion of the active material layer 220 while covering the tab 230.

In addition, the insulating tape 270 may also be attached to a portion of the uncoated portion N where the tab 230 is not located. That is, the insulating tape 270 may be attached to at least a part of the uncoated portion N and the coated portion A, and may be attached to both sides thereof. Through this, the electrode 200 may secure safety in relation to the other electrode 200 and/or the separator 30 located on one side and the other side of the electrode 200.

In addition, the insulating tape 270 may be provided together with the first reinforcing material 250 and/or the second reinforcing material 260 described in FIGS. 10 and 11. The insulating tape 270 may be attached to the first reinforcing material 250 and/or the second reinforcing material 260 while covering the tab 230.

The insulating tape 270 may include an insulating material.

For example, the insulating material may include at least one selected from the group consisting of polyimide (PI), polysulfone, polyurethane (PU), polyamide (PA), 6,6-nylon, polycarbonate (PC), polytetrafluoroethylene (PTFE), polymethyl methacrylate (PMMA), and polyethylene terephthalate (PET).

Meanwhile, the insulating tape 270 may further include an adhesive layer so that the insulating material may be attached to the substrate 210, the active material layer 220, the tab 230, and/or the reinforcing layer.

The adhesive layer includes an adhesive material.

For example, the adhesive material may include at least one of a silicone-based resin, an acrylic resin, a urethane-based resin, a rubber-based resin, an epoxy resin, a polyolefin, and combinations thereof.

For example, the acrylic resin may include an acryl, an ester copolymer, ethyl acrylate, butyl acrylate, hexyl acrylate, n-octyl acrylate, isooctyl acrylate, 2-ethylhexyl acrylate, isononyl acrylate, lauryl acrylate, acrylic acid, maleic acid, fumaric acid, itaconic acid, kryptonic acid, acrylamide, N-vinyl pyrrolidone, N-vinyl caprolactam, acrylonitrile, acryloylmorpholine, 2-hydroxyethyl acrylate, 2-hydroxypropyl acrylate, 2-hydroxybutyl acrylate, and the like.

For example, the urethane-based resin may include polyurethane and the like.

For example, the rubber-based resin may include natural rubber, synthetic rubber, and the like.

Through this, the electrode 200 according to one embodiment of the present disclosure can provide a method for protecting each component included in the electrode 200.

According to an embodiment of the present disclosure, an electrode assembly and/or a secondary battery with improved reliability and/or safety can be provided.

According to another embodiment of the present disclosure, an electrode assembly and/or a secondary battery in which crack occurrence is prevented can be provided.

## Claims

1. An electrode assembly (40) comprising:
a first electrode (200); and
a second electrode (200),
wherein at least one of the first electrode (200) and the second electrode (200) includes:
a substrate (210) having a hole (240) formed therein;
a coating layer (220) provided on a first part of the substrate (210); and
a tab (230) joined to a second part of the substrate (210), and
wherein the hole (240) extends through the substrate (210) and at least partially overlaps an edge portion of the tab (230).

2. The electrode assembly (40) of claim 1, wherein at least a part of the hole (240) is formed with a curved surface.

3. The electrode assembly (40) of claim 1 or 2, wherein the hole (240) at least partially overlaps one or more corner portions (231) of the tab (230).

4. The electrode assembly (40) of claim 1, wherein the hole (244) forms a C shape, and the edge portion of the tab (230) is located inside the C shape.

5. The electrode assembly (40) of any one of the preceding claims, wherein one end of the tab (230) forms a round shape.

6. The electrode assembly (40) of claim 5, wherein the hole (240) overlaps the one end of the tab (230).

7. The electrode assembly (40) of any one of the preceding claims, wherein a width of the hole (240) is 1/5 or more of a width of the tab (230).

8. The electrode assembly (40) of any one of the preceding claims, wherein at least one of the first electrode (200) and the second electrode (200) further includes a first reinforcing material (250) provided adjacent to the edge portion of the tab (230) on the substrate (210).

9. The electrode assembly (40) of claim 8, wherein at least one side end of the first reinforcing material (250) is in contact with the hole (240).

10. The electrode assembly (40) of any one of the preceding claims, wherein at least one of the first electrode (200) and the second electrode (200) further includes a second reinforcing material (260) provided on the substrate (210) while covering the tab (230).

11. The electrode assembly (40) of any one of the preceding claims, wherein at least one of the first electrode (200) and the second electrode (200) further includes an insulating tape (270), wherein the insulating tape (270) is adhered to the substrate (210) while covering the tab (230), and wherein the insulating tape (270) includes an insulating material.

12. A secondary battery (100) comprising:
the electrode assembly (40) according to any preceding claim; and
a case (50) accommodating the electrode assembly (40).
